# EUROPEAN PATENT APPLICATION

(11) **EP 4 782 181 A1**
(43) Date of publication of application: **29.07.2026**
(21) Application number: 25153346.9
(22) Date of filing: 22.01.2025
(51) Int. Cl.: B29C 64/112, B29C 64/236, B29C 64/393, B33Y 10/00, B33Y 30/00, B33Y 50/02, B33Y 80/00

(54) **METHOD OF INKJET PRINTING OF A PRINT WITH SATIN LOOK AND A PRINTER THEREFOR**

(71) Applicant: Canon Production Printing Holding B.V., 5914 HH Venlo (NL)
(72) Inventor: Knechten, Carolus A. M., 5914 HH Venlo (NL)
(74) Representative: Canon Production Printing IP Department

(57) **Abstract**

A method of printing 3D structures distributed on a print medium on a scanning printer in a scanning direction, comprising the steps of printing one array (36) of out-of-surface pillars to have a first common angle with a surface of the print medium, and printing a neighbouring array (37) of out-of-surface pillars to have a second common angle with the surface of the print medium, wherein a direction of a vector component of a projection of a pillar of the neighbouring array to the surface of the print medium in the scanning direction is opposite to a direction of a vector component of a projection of a pillar of the one array to the surface of the print medium in the scanning direction.

## Description

### BACKGROUND OF THE INVENTION

### 1. Field of the invention

The invention relates a method of printing 3D structures distributed on a print medium by means of a scanning printer in a scanning direction, comprising the steps of:
- printing one array of out-of-surface pillars to have a first common angle with a surface of the print medium, and
- printing a neighbouring array of out-of-surface pillars to have a second common angle with the surface of the print medium.

With the wording "CMYK(W) colours" the colours cyan, magenta, yellow, black and optionally white are meant respectively.

The scanning printer comprises a print head with a plurality of nozzles to eject ink towards the surface of the print medium.

### 2. Description of Background Art

Prints can be made build up from micro-scale pillars. With such a technology, pillars that are printed mono-directionally are tilted against the printing direction due to the carriage speed, flight time of the drops, and decreasing distance between print head and top of the pillar. Usually prints are made with only a single orientation of the pillars, or preferably (because of productivity) bi-directional, so that the pillars have no tilt. When printing pillars monodirectional, the pillars end up tilted because the distance from print head to landing on the surface of the print medium becomes smaller.

### SUMMARY OF THE INVENTION

It is an object of the invention to provide an improved method of creating a print with a very special look and feel.

In accordance with the present invention, a method of printing according to claim 1, an inkjet printer according to claim 10, and a computer program according to claim 12 are provided.

The method provides printing 3D structures distributed on a print medium on a scanning printer in a scanning direction. The method comprises the steps of:
- printing one array of out-of-surface pillars to have a first common angle with a surface of the print medium, and
- printing a neighbouring array of out-of-surface pillars to have a second common angle with the surface of the print medium,
wherein a direction of a vector component of a projection of a pillar of the neighbouring array to the surface of the print medium in the scanning direction is opposite to a direction of a vector component of a projection of a pillar of the one array to the surface of the print medium in the scanning direction.

Via said printing strategy and print files, two patterns can be used in the same print. One pattern is inserted at 'odd' lines in the image to be printed. The other pattern is inserted at 'even' lines in the image to be printed. When printing with 'odd' steps in the printing strategy, the 'left tilted' pillars are printed in odd swaths, the 'right tilted' pillars in the return swath or the other way around. The printing strategy according to the present invention and the way of preparing print files gives the option of combining these two different structures in a single print.

According to an embodiment the scanning printer is configured to print bidirectionally in the scanning direction by means of a print head assembly, and the method comprises a first step of printing the one array of out-of-surface pillars in a first amount of passes by means of the scanning print head assembly and a second step of printing the neighbouring array of out-of-surface pillars in a second amount of passes by means of the scanning print head assembly, and repeating the first and second step for the next pairs of arrays of out-of-surface pillars.

According to a further embodiment the method comprises repeating the sub-steps of after each pass in the first step turning around the scanning direction followed by a pass of the second step and turning around the scanning direction after said pass of the second step. By doing so, the pillars in the one array and the neighbouring array are printed simultaneously. The pillars in the one array and in the second array are becoming higher alternately. The pillars of the one array become higher when the carriage of the printer is going in the initial direction of printing the pillars. The pillars of the neighbouring array become higher when the carriage of the printer is going in the direction opposite to the initial direction. The direction from which the carriage arrives at the location of the pillar determines the direction, i.e. the angle, in which the pillar grows in height.

According to an embodiment the method comprises the step of determining the first number of passes by means of a predetermined height setting for the 3D structures.

According to an embodiment the first amount of passes is equal to the second amount of passes.

According to an embodiment the method comprises the step of performing a paper step in a direction opposite to the scanning direction between printing of the one array and printing of the neighbouring array. According to a further embodiment the paper step is half of a distance between neighbouring nozzles in a print head of the printer.

According to an embodiment a height of the pillars is up to approximately 1 mm, preferably in a range of 0.4 - 0.5 mm.

According to an embodiment the first common angle and the second common angle are within a range of 40 to 80 degrees with the surface of the print medium. The common angles are managed by the print velocity of the print head assembly, a distance between the print head assembly and the print medium, a thickness of the pillars, i.e. a cluster size of the pillars, a cure power and/or a drop velocity. By means of pixel shift in the bitmap image for the 3D structures to be printed, the common angles can be made down to 40 degrees with the surface of the print medium.

According to a further embodiment the first common angle and the second common angle are within a range of 60 to 80 degrees and preferably between 70 and 75 degrees with the surface of the print medium. By applying said ranges (60-80, 70-75) for the common angles a satin effect becomes more visible than in the other mentioned common angles (40-60, 75-80).

The present invention also relates to an inkjet printer comprising:
- a translatable printhead carriage translatable over a medium support surface and comprising at least one printhead comprising nozzles for jetting droplet of UV curable marking material onto a print medium on the medium support surface;
- a curing station configured for emitting UV radiation for curing marking material on the print medium on the medium support surface; and
- a print controller configured to perform the steps of the method according to the present invention.

According to an embodiment the inkjet printer is a roll fed printer or a flatbed printer.

The present invention also relates to a non-transitory software medium comprising a computer program with instructions which, when the program is executed by a print controller of an inkjet printer, cause the computer to carry out the steps of the method of the present invention.

The invention also relates to a print medium with a printed surface produced by performing the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic example of a scanning inkjet printer;
- Fig. 2: illustrates printing structures according to the present invention;
- Fig. 3: is an example of the steps of the method according present invention;
- Fig. 4: shows pictures of end results of the printed print medium according to the present invention;
- Fig. 5: is an example of a flow diagram of the method according to the present invention; and
- Fig. 6: is a non-transitory software medium according to the invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

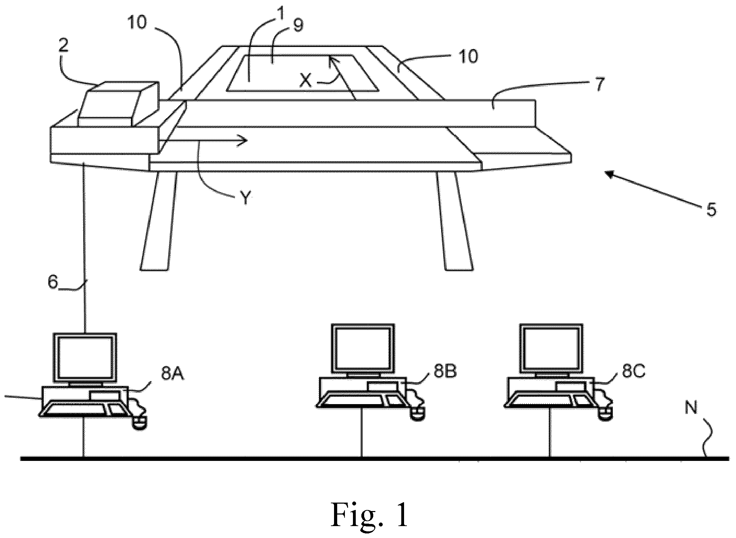

Fig. 1 is a print system 5 comprising a number of workstations 8B and 8C, which may be personal computers or other devices for preparing colour image data for three dimensional objects to be printed. These workstations have access to a network N for transferring the colour image data to a print controller 8A that is configured to receive print jobs for three-dimensional objects consisting of voxels and derive pass images for each pass of the print engine 2 over the print medium support surface 1 of the flatbed. A print medium 9 is supported on the print medium support surface 1 facing the print engine 2 during printing. The print system comprises the print engine 2 for applying colorants, in this embodiment cyan (C), magenta (M), yellow (Y), black (K) and white (W) colorant, to a flat print medium 9, the substrate, in order to obtain a printed object. In this embodiment a UV-curable material is applied by printheads that reciprocally scan the substrate in a moving direction Y perpendicular to a transport direction X by means of a gantry 7. A curing station is provided to solidify the marking material after printing on the substrate by exposing it to UV-radiation and/or UV light. The radiation preferably has a wavelength between or around 10 and 400 nm. Other types of marking materials or pre-treatment materials, such as primers, may further be applied within the present invention. It will further be appreciated that the present invention may be applied to any scanning inkjet printer, which includes a flatbed printer as shown in Fig. 1 as well as roll, web, sheet, rigid, and/or hybrid printers, wherein the print medium 9 is transported in the transport direction X perpendicular to the scanning direction Y, preferably between passes of the printheads. The print system 5 in Fig.1 is a flatbed printer. However, an UV curable inkjet roll fed printer may also be used to apply the method according to the present invention.

Preferentially the distance between the flat substrate and the print elements that are used to apply the various colorants, is variable. This distance may be varied in order to keep the upper surface of the object within the latitude of the print elements. The latitude of the distance between a substrate of the scanning printhead is in print engine 2 about 0.5 to 2 mm.

The printer comprises a user interface (not shown), which is placed on the print engine, but which may also be part of the printer controller 8A, for receiving a print job of a digital image to be printed on the print medium and for receiving an identification of at least one part of the digital image to be printed on a corresponding part of the print medium for which the first common angle with the surface of the print medium in the scanning direction is prescribed and at least one part of the digital image to be printed on a corresponding part of the print medium for the second common angle with the surface of the print medium in the scanning direction is prescribed, and an amount of ink is intended to be deposited. The amount of ink is usually clustered in clusters of drops which are deposited on top of each other with a tilt prescribed by the common angles. By means of the user interface print job parameters and printing system parameters may be adapted, such as an absolute height parameter for indicating a maximum height of the structures to be printed. A maximum number of voxels in the height direction perpendicular to the substrate may be used as height parameter for the structures. A user interface may be provided as a network site that is accessible with a browser on a client computer.

After sending a print job comprising image data from a workstation to the printer controller, the print job will be made visible on the user interface. It may be scheduled for further processing after selection from a list of print jobs or, alternatively, if the print job is on top of the list of print jobs. The print job comprises parameter values that determine the way the image data are to be printed, such as the way how the image data are to be converted into print data.

### Inkjet printing of structures

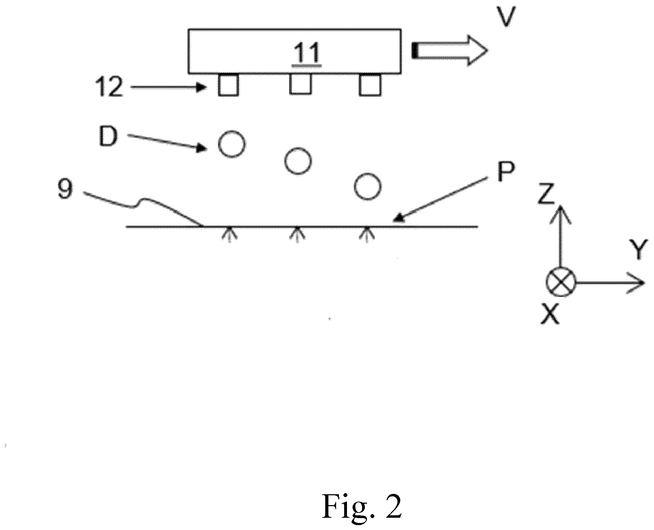

Fig. 2 illustrates a step of a method to print the structures on a print medium 9. The print medium 9 is supported on the print medium support surface 1, such that a side of the print medium 9 faces the nozzles 12 of the printhead 11 during printing. The print medium 9 may be any suitable type of material(s), such as paper, plastic or metal foils, banners, sheets, rigids, webs, textiles, etc.

In Fig. 2, the printhead 11 moves in its scanning direction Y over the stationary print medium 9. The printhead 11 may be any suitable type of inkjet printhead, for example the printhead as described in US 10391768 B2. The nozzles 12 jet a plurality of droplets D of a UV-curable marking material onto the print medium 9 in order to form a cluster of drops. Each nozzle 12 is provided with a respective actuator (not shown) to jet a droplet D from said nozzle 12. Each actuator is controlled to jet its droplet D at a predetermined position P on the print medium 9. Therein, the relative position and velocity of each nozzle with respect to the respective position P has been taken into account. In Fig. 2, during this pass of the printhead 11 each nozzle 12 jets a droplet D, such that these droplets D are positioned at a non-zero distance from one another on the print medium 9. It will be appreciated that the print medium 9 in Fig. 2 may have been treated with (pre)printing or processing prior to the step shown in Fig. 2. For example, a primer and/or one or more initial layers of marking material may have been provided on the print medium 9 to provide a surface with suitable adhesion for the marking materials applied in Fig. 2.

After jetting, the clusters of droplets D form spaced apart structures-in-formation on the print medium 9 after deposition. The distance between the structures-in-formation is sufficiently great, so that coalescence of neighbouring structures-in-formation is prevented. The space between the eventually printed structures is large enough to comprise amounts of ink which are intended to be applied to the printed structured according to the present invention. It will be appreciated that one or more clusters of droplets D may be deposited per position P per pass of the printhead 11 to contribute to the respective drop for forming the respective structure-in-formation. Multiple droplets D deposited at the same position P during a single pass are deposited in close enough proximity, such that these coalesce together into a single drop. The jetted clusters of droplets D of marking material are exposed to radiation from a curing station. The radiation, in this example UV light, triggers a photochemical reaction in the jetted marking material, which results in the hardening and fixation of the jetted clusters of droplets D. This process is commonly referred to as 'curing'. The jetted clusters of droplets D were deposited directly on the print medium 9, so that by curing the jetted marking material the initial bases of the structures-in-formation are hardened and fixed to the print medium 9.

The printhead 11 passes over the print medium 9 during a second pass in the scanning direction Y. The nozzles 12 are then activated again to jet further clusters of droplets D onto the cured, hardened bases of the structures-in-formation. Based on the velocity and relatively position of a nozzle 12 with respect to a position P, a release timing is determined at which moment a cluster of droplets D is released from a respective nozzle 12, so that said cluster of droplets D lands on the structure-in-formation at the intended position P. In a basic example, during every pass the relative position of a nozzle 12 with respect to the to be jetted position P is the same, while the velocity of the printhead 11 is kept constant. According to the present invention no or only small corrections may be applied to compensate for the increasing height of the structures-in-formation in order to get the tilted structures with the first and second common angle. As such, one or more clusters of droplets D of UV-curable marking material are deposited on top of the bases of the structures-information. The amount of marking material deposited per position P, e.g. the number and/or (total) volume of droplets added per pass per structure-in-formation is preferably sufficiently small, so that the added marking material for its total or major part resides on top of the respective structure-in-formation. Thereby, the height of the structures-in-formation is increased incrementally.

Subsequently, the added marking material is cured by means of the curing station 14. The clusters of droplets D added on top of each structure-in-formation are hardened and fixed to the underlying bases, which were formed in Fig. 2. This process of adding one or more clusters of droplets D to the top of each structure-in-formation followed by curing the added marking material by means of UV radiation is then repeated a number of times to create low three-dimensional structures. The structures extend out-of-plane in the heigh direction Z with respect to the print medium 9 and are spaced apart from one another in a substantially contactless manner. It will be appreciated that when a large number of structures is applied in a dense manner, local deviations may lead to a small number of structures being in contact with one another. The structures provide space for applying ink according to the method of the present invention.

### Printing method

The structures are formed by iteratively depositing clusters of multiple droplets D of a marking material on top of a structure-in-formation and curing the deposited marking material before adding the next cluster of drops. This requires that the clusters of drops are deposited merely on top of the structures-in-formation. In a simple example this may be achieved by keeping the printhead 11 stationary to the print medium 9 with a narrow distance between. In a scanning inkjet printer 5, the printhead 11 moves reciprocally in the scanning direction Y. Herein an example of a method for printing low structures on such a printer 1 will be described.

The process is initiated by the controller receiving print job information, which triggers the printer 5 to be operated in a structure printing mode when executing the corresponding print job. The print job information defines in any suitable format at least one location or area of the structures on the print medium 9, a height parameter for a height of the structures (e.g. an average or maximum height in mm or µm), a marking material parameter (e.g. at least one colour). A standard density may be applied in case no specific density is prescribed by the print job information. It will be appreciated that multiple, different marking materials may be applied in combination to form a single structure, but the current example will be explained with reference to a single marking material. Processing the print job information results in the selection of a marking material. e.g. based on colour.

The controller has further stored for each marking material a droplet size parameter, corresponding to a volume of a droplet D of said marking material from a nozzle 12 of the printer 12. A value for the droplet size parameter may be determined by printing a structure in a predetermined number of passes and dividing the final height of the structure by the number of passes and/or by measuring the drop volume or dimensions. The droplet size may vary dependent on other print process parameters, such as jetting speeds, temperature, etc.

The controller has further stored for each marking material a cluster size parameter, corresponding to a number of droplets D in a cluster of said marking material from at least one nozzle 12 of the printer 12. A value for the cluster size parameter may be determined by printing a structure in a predetermined number of passes and dividing the final height of the structure by the number of passes and/or by measuring the drop volume or dimensions. The cluster size may vary dependent on other print process parameters, such as jetting speeds, temperature, etc. The controller may store a comprehensive look-up table which defines droplet height, cluster sizes, droplet sizes, a distance between the clusters and/or volumes across a variety of print process parameters. Additional, a cross-sectional dimension parameter for the structures S is determined or selected, for example a cross-sectional area or diameter measured perpendicular to the direction in which the height is measured. The print job information may define a cross-sectional dimension parameter or the cross-sectional dimension parameter may follow from other process parameters. In the latter case, the cross-sectional dimension parameter may correspond to the area formed by a cluster of droplets D on the surface of the print medium 9, which has been previously determined and stored on the controller's memory.

The droplet size parameter in combination with the cluster size parameter is then compared to the height parameter to determine the number of passes of the printhead 11 for forming the structure with the height corresponding to the height parameter. Optionally, the controller may determine a number of individual droplets D which are deposited per pass onto a structure-in-formation to together form a cluster of drops. In this example, a single cluster of droplets D will be jetted onto each structure-in-formation during each pass (so each cluster of drops corresponds to a single cluster). The number of passes may then be determined by dividing the height by a cluster height derived from the droplet volume and the cluster size or by calculating the volume of a structure using the cross-sectional dimension and height parameters and comparing that to the droplet size parameter and cluster size parameter. The determined number of passes is rounded to an integer value.

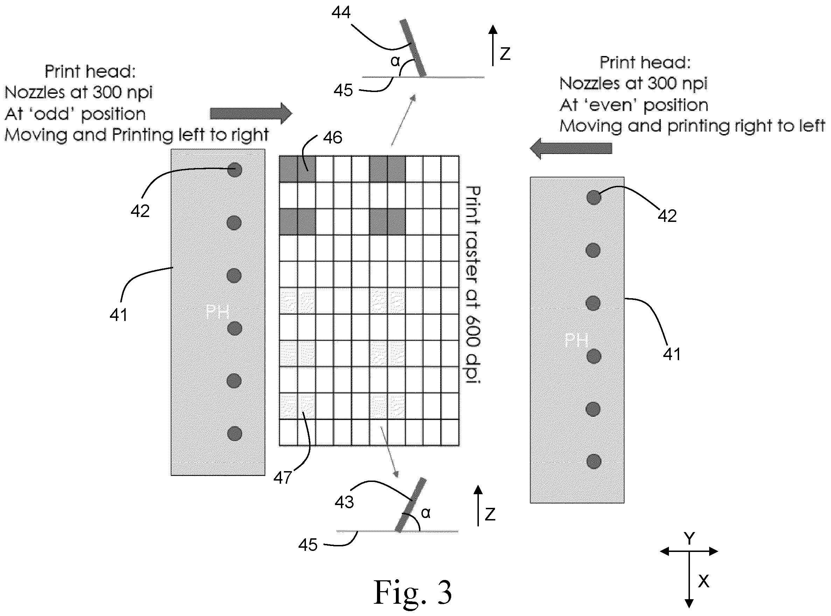

Fig. 3 shows an example of an embodiment of the method according to the present invention. The print head 41 is moving and printing from left to right in the Y direction and ejects ink drops 46 from nozzles 42 at an "odd" position in the array of nozzles extending in the X direction. The result after a number of passes is a pillar 44 out of the surface 45 of the print medium in the Z direction having an angle of α radians in the Y direction with the surface 45 of the print medium. In the example in Fig. 3 the print head is bi-directionally printing in the Y direction. The printed head 41 is moving and printing from right to left in the Y direction and ejects ink drops 47 from nozzles 42 at an "even" position in the arrays of nozzles extending in the X direction. The result after a number of passes is a pillar 43 out of the surface 45 of the print medium in the Z direction having an angle π- α radians in the Y direction with the surface 45 of the print medium. By doing so, the direction of the vector component of the projection of the pillar 43 jetted from an even position to the surface 45 of the print medium in the scanning direction Y is opposite to the direction of the vector component of the projection of a pillar 44 jetted from an odd position to the surface 45 of the print medium in the scanning direction Y.

In the example in Fig. 3 the nozzles 42 are at a distance of 300 nozzles per inch from each other. In an alternative embodiment the print head 41 is moving by a print medium step in the X direction of half the nozzle distance between the movement of the print head 41 from left to right and the movement of the print head 41 from right to left. In this way a print raster of 600 dots per inch is created. In the example in Fig. 3 a pillar is built up of clusters of 2 drops each on top of each other ejected during successive passes.

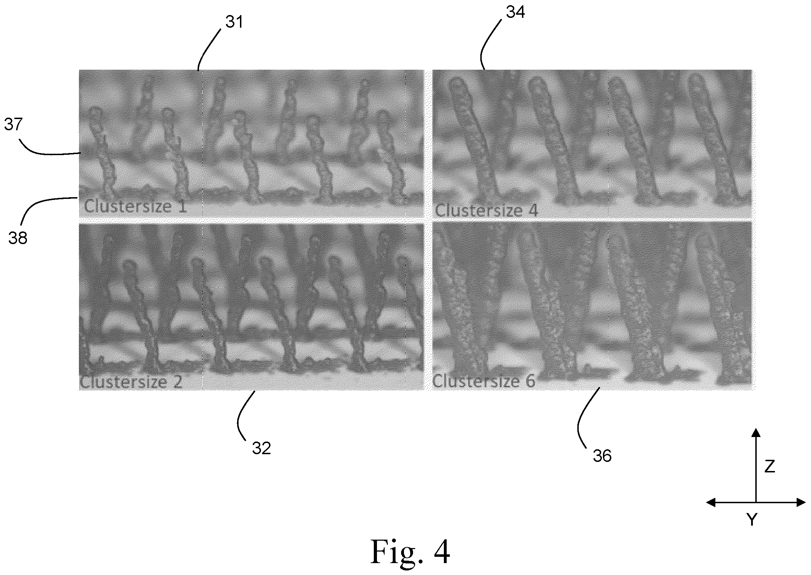

Fig. 4 shows pictures 31, 32, 34, 36 of end results of the printed print medium after creating the pillars out of the surface of the print medium in the Z direction. Fig. 4 illustrates the pillars with different cluster sizes. The height of the pillar in Fig. 4 is large compared to its cross-sectional width parallel to the plane of the print medium. The height of the pillars in the Z direction is up to approximately 1 mm, preferably in a range of 0.4 - 0.5 mm. This elongated shape allows the pillars to be bent. The cured marking material provides sufficiently elasticity to allow the pillars to be bent and revert back to its original shape, when the pressing force is removed. Providing a large number of such pillars in a dense configuration provides a haptic surface, with a touch and visual sensation comparable to satin. The reflectivity of the surface is also significantly less than an entirely smooth surface formed of the same marking material(s). In the example of Fig. 4 the pillars are formed by of on top of each other jetted clusters of droplets. In a first image 31 the cluster size equals 1. In a second image 32 the cluster size is 2. In a third image 34 the cluster size is 4. In a fourth image 36 the cluster size is 6. The pillars form a plurality of arrays 36, 37 of pillars. Pillars in a first array 37 are tilted with an angle α in the Y direction according to the present invention. Pillars in a second - neighbouring - array 38 are titled with an opposite angle π - α in the Y direction according to the present invention. The angles between the pillar and the substrate may alternate in the subsequent arrays of pillars. By doing so, the direction of the vector component of the projection of a pillar of the second array 38 to the surface of the print medium in the scanning direction is opposite to the direction of the vector component of the projection of the pillar of the first array 37 to the surface of the print medium in the scanning direction.

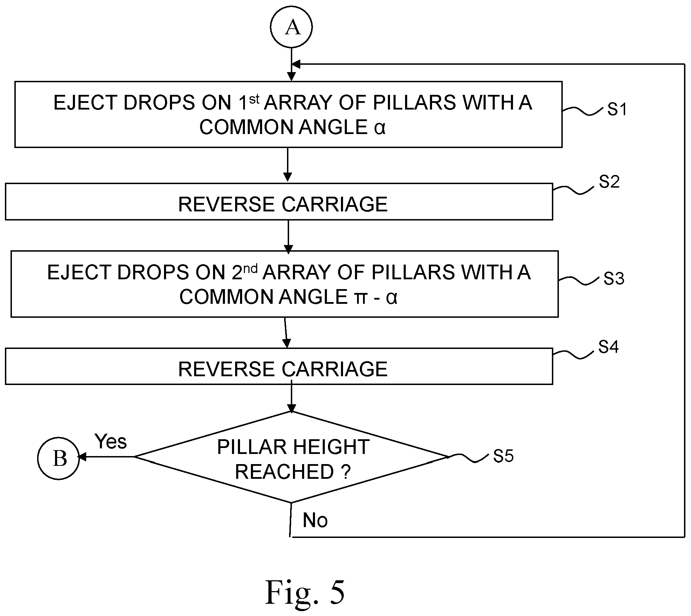

Fig. 5 is a flow diagram of the method according to the present invention. The method is suitable for printing 3D structures distributed on a print medium by a scanning printer in a scanning direction The method starts in a starting point A which leads to a first step S1.

In the first step S1 drops are ejected on the one array of out-of-surface pillars which have a first common angle with a surface of the print medium.

In a second step S2 the carriage of the printer is reversing its moving direction. In this example no paper step in the X direction perpendicular to the scanning direction Y is carried out.

In a third step S3 drops are ejected on a neighbouring array of out-of-surface pillars which have a second common angle with the surface of the print medium.

In a fourth step S4 the carriage of the printer is reversing its moving direction. In this example no paper step in the X direction perpendicular to the scanning direction Y is carried out.

In a fifth step S5 it is checked if the pillars of the one array and the pillars of the neighbouring have reach the prescribed height according to the print job. In other words, it is checked if the number of passes is equal to the first amount of passes. For convenience reasons, the number of passes of the one array - the first amount of passes - and the number of passes of the neighbouring array - the second amount of passes - are the same amount. However, according to the invention the first amount of passes may differ from the second amount of passes. If the second amount of passes is for example higher than the first amount of passes, some passes are added to the first amount of passes without ejecting ink on the pillars in the one array. However in order to get the satin look and feel for the printed end product it is preferable that the first amount of passes is equal to the second amount of passes. If the check in the fifth step S5 is positive, the method ends in an end point B. If not, the method returns to the first step S1.

According to the present invention a direction of a vector component of a projection of a pillar of the neighbouring array to the surface of the print medium in the scanning direction is opposite to a direction of a vector component of a projection of a pillar of the one array to the surface of the print medium in the scanning direction.

According to an embodiment the scanning printer is configured to print bidirectionally in the scanning direction Y by means of a print head assembly, the printing the one array of out-of-surface pillars is performed in a first amount of passes by means of the scanning print head assembly and the printing the neighbouring array of out-of-surface pillars in a second amount of passes by means of the scanning print head assembly.

The steps S1 - S5 in the flow diagram of Fig. 5 may be repeated for next pairs of a one array and a neighbouring array of out-of-surface pillars as specified in a print job.

The first amount of passes may be determined to be a predetermined height set in a print job for the 3D structures. The first amount of passes is preferably equal to the second amount of passes.

In an alternative embodiment the second step S2 comprises a paper step in a first direction equal to the transport direction X as shown in Fig. 3. The paper step is preferably equal to half the distance between two neighbouring nozzles in the print head assembly and the fourth step S4 comprise a paper step in a second direction opposite to the first direction. By doing so, the resolution of printing in the X direction is doubled.

In a second alternative embodiment - which is applicable if the amount of nozzles in the print head assembly is quite high and comparable with the number of required passes for printing the pillars, the paper step in the fourth step S4 is in the same direction as the first direction. Another nozzle will then take care of ejecting drops on at least the first array of pillars and the nozzle which has ejected drops on the first array of pillars will then eject drops on the second array of nozzles. Depending on the number of nozzles in the print head assembly, the paper step may even be larger, for example a multiple of a distance between two neighbouring nozzles or a multiple of a distance between two neighbouring nozzles plus half a distance between two neighbouring nozzles.

To have an optimal visual and haptic effect of satin look and feel a height of the pillars is up to approximately 1 mm, preferably in a range of 0.4 - 0.5 mm.

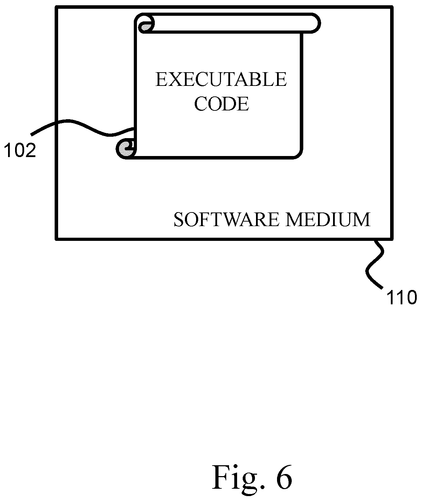

Fig. 6 schematically shows a non-transitory software medium 110 according to the invention. The software medium 110 comprises executable code 102 configured to, when executed, perform the method according to the invention, e.g. as described with respect to either the printer shown in Fig. 1 or the method shown in Figs. 3A, 3B, 4 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A method of printing 3D structures distributed on a print medium (9, 45) by means of a scanning printer (5) in a scanning direction (Y), comprising the steps of:
- printing one array (37) of out-of-surface pillars (46) to have a first common angle (α) with a surface of the print medium (9, 45), and
- printing a neighbouring array (38) of out-of-surface pillars (47) to have a second common angle (π - α) with the surface of the print medium (9, 45),
wherein a direction of a vector component of a projection of a pillar (47) of the neighbouring array (38) to the surface of the print medium (9, 45) in the scanning direction (Y) is opposite to a direction of a vector component of a projection of a pillar (46) of the one array (37) to the surface of the print medium (9, 45) in the scanning direction (Y).

2. The method according to claim 1, wherein the scanning printer is configured to print bidirectionally in the scanning direction by means of a print head assembly, and the method comprises a first step of printing the one array of out-of-surface pillars in a first amount of passes by means of the scanning print head assembly and a second step of printing the neighbouring array of out-of-surface pillars in a second amount of passes by means of the scanning print head assembly, and repeating the first and second step for the next pairs of arrays of out-of-surface pillars.

3. The method according to claim 2, wherein the method comprises repeating the sub-steps of after each pass in the first step turning around the scanning direction followed by a pass of the second step and turning around the scanning direction after said pass of the second step.

4. The method according to claim 2 or 3, wherein the method comprises the step of determining the first amount of passes by means of a predetermined height setting for the 3D structures.

5. The method according to claim 4, wherein the first amount of passes is equal to the second amount of passes.

6. The method according to any of the preceding claims, wherein the method comprises the step of performing a paper step in a direction opposite to the scanning direction between printing of the one array and printing of the neighbouring array.

7. The method according to any of the preceding claims, wherein a height of the pillars is up to approximately 1 mm, preferably in a range of 0.4 - 0.5 mm.

8. The method according to any of the preceding claims, wherein the first common angle and the second common angle are within a range of 40 to 80 degrees with the surface of the print medium.

9. The method according to claim 8, wherein the first common angle and the second common angle are within a range of 60 to 80 degrees and preferably between 70 and 75 degrees with the surface of the print medium.

10. An inkjet printer comprising:
- a translatable printhead carriage (2) translatable over a medium support surface (10) and comprising at least one printhead (11) comprising nozzles (12) for jetting droplet of UV curable marking material onto a print medium (9, 45) on the medium support surface (10);
- a curing station configured for emitting UV radiation for curing marking material on the print medium (9) on the medium support surface (10); and
- a print controller configured to perform the steps of the method according to any of the preceding claims.

11. An inkjet printer according to claim 10, wherein the inkjet printer is a roll fed printer or a flatbed printer.

12. A non-transitory software medium comprising a computer program with instructions which, when the program is executed by a print controller of an inkjet printer, cause the computer to carry out the steps of the method of any of the claims 1 to 9.

13. A print medium with a printed surface produced by performing the steps of the method according to any of the claims 1 to 9.
